# EUROPEAN PATENT APPLICATION

(11) **EP 1 612 524 A2**
(43) Date of publication of application: **04.01.2006**
(21) Application number: 05396022.5
(22) Date of filing: 01.07.2005
(51) Int. Cl.: G01G 19/12

(54) **Weighing system**

(30) Priority: 01.07.2004 FI 20040913
(71) Applicant: TAMTRON OY, 33561 Tampere (FI); Ahtärin Metallirakenne Tupamäki & Co OY, 63600 Töysä (FI)
(72) Inventor: Tupamäki, Aimo, FI-63600 Töysä (FI); Jussila, Jyrki, FI-33720 Tampere (FI); Vitanen, Sakari, FI-63600 Töysä (FI)
(74) Representative: Heikkinen, Esko Juhani

(57) **Abstract**

The invention relates to a weighing apparatus for a load in a vehicle, comprising a weighing sensor (2). Between the weighing sensor (2) and a load holder (6) there is a lifting cylinder (5) such that the load holder can rest on a frame (8) without burdening the weighing sensor, yet such that the lifting cylinder enables hoisting the load holder off the frame to a weighing position for subjecting the weighing sensor to at least some of the load holder's weight.

## Description

### Technical field

The invention deals with weighing loads in vehicles and relates to a weighing apparatus mountable on a vehicle. The invention is useful for example in loading, transfer and hauling equipment.

### Technical background

Many occasions call for weighing the load of a vehicle. Weighing is useful for example in terms of optimizing the size of a load, avoiding overloads, measuring the amount of material to be loaded or unloaded or working out a toll charged by the weight.

For the purpose of weighing a load, the vehicle can be fitted with a sensor providing a signal consistent with the load. The sensor is usually mounted fixedly on a vehicle for measuring the load all the time. Prior solutions are also available, wherein a hydraulically operated wedge assembly is fitted between a truck frame and a subframe for lifting the subframe to a measuring point.

### General description of the invention

A weighing apparatus as set forth in claim 1 has now been invented, which can be used for weighing a load to be loaded on or unloaded from a vehicle. Other claims disclose a few practical embodiments and applications for the invention.

According to the invention, between a vehicle-frame mounted weighing sensor and a load holder there is a lifting cylinder such that the load holder can rest on the frame without burdening the weighing sensor, yet such that the lifting cylinder enables hoisting the load holder off the frame to a weighing position, in which the weighing sensor is subjected to at least some of the load holder's weight.

Thus, the sensor is only subjected to a load during a weighing process. Since unnecessary loading can be avoided, the sensors' wear is reduced, resulting in a longer service life and lower maintenance. The measuring accuracy is also retained longer at initial level. The sensor can also be sized optimally by eliminating the need to account for loads induced by motion, especially during a drive. This results in improved accuracy. Since automobiles have live structures, even a complete breakdown of fixed sensors is entirely possible and this is avoided according to the invention. As the weight is applied directly and only to sensors, a higher degree of accuracy is achieved. The process of lifting a load holder causes loosening of accumulated debris, such as snow and ice, thus eliminating even more sources of error. If weighing becomes necessary while material is being loaded on the holder, the cylinder functions as a resilient element and absorbs shocks on the sensor.

The solution can be implemented in a simple and advantageous manner. Yet the resulting construction will be reliable and highly durable in operation.

As a rule, the vehicle is provided with several sensors (1-n sensors) - most typically 2-10 sensors, depending on the structures, load-bearing capacity and precision requirements. The sensor comprises most conveniently a stress-loaded member, such as a beam, which provides a signal consistent with the stress. The member can be provided therefor with a specific element, such as a strain gauge or a piezoelectric element. The weighing sensor may also take the form of a pressure gauge adapted to measure the lifting cylinder's pressure.

The junction between a stress-loaded sensor member and a cylinder comprises preferably a spherical surface or the like focusing guide surface, the force being always applied to the sensor in a straight line regardless of which way the vehicle may be leaning.

The lifting cylinder may have one of its ends, particularly the piston head, adapted to match a bore present in the stress-loaded sensor member. The bore ensures a proper alignment of the lifting cylinder's end in the process of hoisting the load holder, especially when the junction is in the form of a spherical surface.

The lifting cylinder can be hydraulically or pneumatically operated.

The load holder can be for example a platform, an interchangeable platform, a container, a liquid or gas tank, a bucket, lifting forks or the like. The load holder can be mounted on a frame, a subframe or a loader's hoisting equipment.

In the event of having several weighing mechanisms, the pressure system may include a differential motor or cylinder for lifting the load holder evenly, regardless of uneven load distribution.

In order to avoid an accidental overturn of the load holder during a weighing procedure, the structure should be provided with a clamping mechanism. After all, in a weighing process, the load holder is only supported by sensors and cylinders. The clamping mechanism is sized to prevent elements included in the load holder and the frame from touching each other in a weighing position, yet to also preclude an excessive movement of the load holder relative to the frame. The clamping mechanism is capable of aligning itself both longitudinally and laterally.

The clamping mechanism may comprise at least one spigot and socket arrangement, one of said elements being included in the vehicle frame and the other in the load holder. Most preferably, the spigot and the socket are provided with complementary surfaces which are conical. The spigot can be shaped like a bowl or cup. Most conveniently, the spigot is included in the load holder and the socket in the frame. The clamping mechanism can be further provided with a locking member. In a spigot-socket arrangement, it can be for example a bolt fitted through holes present in the spigot and the socket. The bolt can have its end provided with a collar wider than the socket's hole. The locking member can be operated by means of a lifting cylinder. The clamping mechanism is operated synchronically with the weighing apparatus' lifting cylinders. Most preferably, the clamping is released slightly before the load holder's lifting cylinder begins to hoist the holder. After the weighing operation, the clamping mechanism respectively returns to its normal condition locking the load holder to its base. However, the clamping is preferably provided with a spring system allowing a stiff load holder assembly to disengage itself from a vehicle frame as the frame twists during a drive. There are an appropriate number of locking points, for example a number matching that of the weighing cylinders.

The weighing apparatus can be included in a variety of vehicle types, such as trucks, trailer trucks, dumpers, gantry cranes, lifting cage trucks, wheel loaders, forklifts, excavators and other such hauling, loading or transfer equipment.

### Drawings

The attached drawings constitute a part of the written description and relate to a detailed disclosure of the invention presented hereinbelow. In the drawings
- fig. 1 is a front elevation of one weighing apparatus as weighing is not in progress,
- fig. 2 is a side elevation of the same weighing apparatus as weighing is in progress
- fig. 3 is a front elevation of a clamping mechanism as weighing is not in progress, and
- fig. 4 is a side elevation of the same clamping mechanism as weighing is in progress.

### Detailed description for a few embodiments of the invention

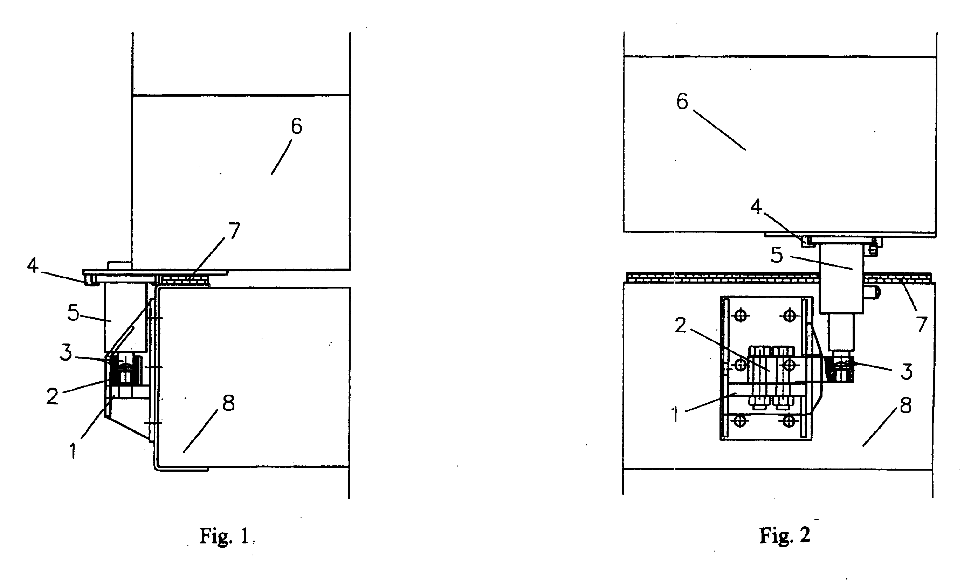

The apparatus shown in figs. 1 and 2 is provided with a weighing sensor 2 mounted on a vehicle frame 8. The sensor comprises a beam, one of its ends being a load-stressed end subjected to a weight resulting from the load. The sensor is provided with an element providing a signal in relation to this weight. The signal is then conveyed to further processing. The element can be for example a strain gauge for measuring a stress applied to the sensor. The sensor is secured by bolts to a mounting base 1 and this is in turn secured by bolts to the vehicle frame.

Between the sensor's 2 load-stressed end and a load holder's body 6 there is fitted a lifting cylinder 5. The cylinder has its body attached to the holder's body by means of a fastening mechanism 4, and the cylinder has its piston adapted to the sensor's load-stressed end by way of transmission elements 3.

When weighing of the load is not in progress, the cylinder 5 has no pressure and, thus, the weight resulting from the holder's body is applied directly to the vehicle frame 8. Furthermore, between the load holder and the frame lies some cushioning material 7, such as rubber, plywood or the like.

When weighing of the load is in progress, the cylinder 5 is supplied with pressure, the cylinder lifting the holder's body 6 and a pressure caused thereby being applied to the sensor 2.

The sensor 2 has its load-stressed end provided with a bore wider than a head of the cylinder's 5 piston, the piston head being fitted therein. The transmission elements 3 include a collar, placed on the bottom of the bore and having a spherical surface on top of it. The piston head is provided with a seating complementary to the spherical surface.

As a rule, the vehicle is provided with several, for example three pieces of such apparatus.

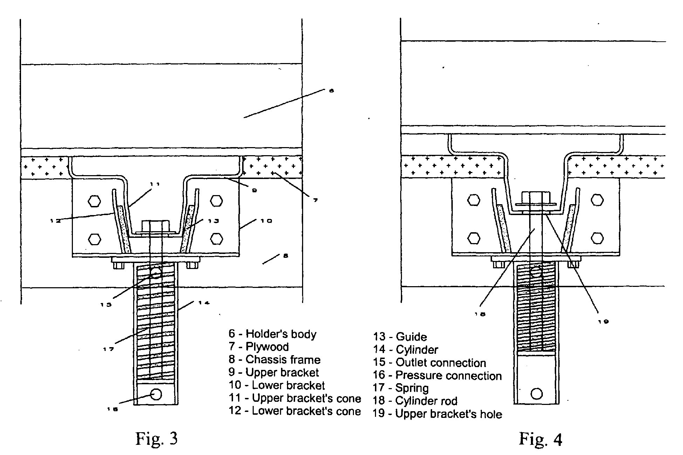

The clamping mechanism of figs. 3 and 4 has an upper bracket 9 mounted on the holder's body 6 and a lower bracket 10 mounted on the vehicle frame 8. The upper bracket comprises a downward directed, bowl-like spigot 11 in the shape of a truncated cone. The lower bracket includes an identically shaped socket 12 responsive to this spigot. The socket has its inner wall further provided with a guide 13, which is replaceable.

With the load holder in a bottom position, the spigot 11 is snugly set in the socket 12, and in the process of lifting the load holder up to a weighing position, the spigot rises therewith and disengages itself from the socket walls. Beneath the lower bracket is a clamping cylinder 14, having the rod of its piston 18 constituting a bolt which is adapted to pass through a hole in the lower bracket and into and through a hole in the base of the spigot. The rod has its head fitted with a collar larger than the hole in the spigot. Between the lower bracket's bottom surface and the piston, inside the cylinder, there is fitted a spring 17 biasing the piston towards the bottom position. Pressure is delivered out of the cylinder at the top end by way of a connection 15 and in at the bottom end by way of a connection 16. When there is no pressure in the cylinder, the upper bracket is pressed into contact with the lower bracket by the spring.

Just before lifting the holder's body 6 to a weighing position, the clamping cylinder is supplied with pressure for raising the piston slightly further than the holder's body. Thus, during a weighing procedure, the locking spigot 11 is disengaged from the socket wall 12 and the lifting cylinder's 14 piston, but a further movement of the load holder is nevertheless precluded. As the holder's body is allowed to descend, the clamping cylinder is relieved of pressure by which the spigot finds its way into its socket and the holder's body locks in place. During a drive, the holder's rigid body is capable of elevating itself off the vehicle frame 8 against the spring force as the vehicle frame is twisting as a result of bamking actions caused by the road. However, the collar at the piston rod's head stops the spigot from bouncing out of its socket as the collar is wider than a hole 19 in the upper bracket's bottom. The piston rod is narrower than the hole in the upper bracket's bottom with the result that, in a weighing procedure, it does not touch the upper bracket, either.

However, when in the lower position thereof, the upper bracket 11 and the lower bracket 12 are always in perfect alignment both in longitudinal and lateral directions. As a result, the weighing apparatus has the end of its lifting cylinder 5 always arbitrarily focused regarding its position on the sensor 2.

The number of clamping mechanisms is also most preferably several, for example one for each weighing cylinder.

## Claims

1. A weighing apparatus for a load in a vehicle, said vehicle having a frame (8) and a load holder (6) fitted thereon, and said weighing apparatus comprising at least one weighing sensor (2), especially mounted on the vehicle frame, which can be subjected to at least some of the load holder's weight for measuring said weight, **characterized in that** between the weighing sensor (2) and the load holder (6) there is a lifting cylinder (5) such that the load holder can rest on the frame (8) without burdening the weighing sensor, yet such that the lifting cylinder enables hoisting the load holder off the frame to a weighing position for subjecting the weighing sensor to at least some of the load holder's weight.

2. An apparatus as set forth in claim 1, wherein the weighing sensor (2) is pressed by the lifting cylinder (5) by way of a focusing guide surface.

3. An apparatus as set forth in claim 2, wherein the focusing guide surface comprises a spherical surface.

4. An apparatus as set forth in any of claims 1-3, wherein the lifting cylinder (5) has one of its ends, especially the piston head, adapted to match a bore present in the weighing sensor (2).

5. An apparatus as set forth in any of claims 1-4, which is provided with a clamping mechanism (figs. 3 and 4) for immobilising the load holder with respect to the frame.

6. An apparatus as set forth in claim 5, wherein the clamping mechanism comprises at least one locking spigot (11) mounted on the load holder or the frame, and a socket (12) included respectively in the frame or the load holder.

7. An apparatus as set forth in claim 6, wherein the locking spigot (11) or the socket (12) is conical.

8. An apparatus as set forth in any of claims 5-7, wherein the clamping mechanism is provided with a frame-mounted lifting cylinder (14) and a bolt mounted thereon and movable relative to the frame.

9. An apparatus as set forth in claim 6 or 7 and in claim 8, wherein the bolt has its top end passing through a hole present in the load-holder mounted locking spigot or socket.

10. A vehicle, such as a truck or a loader, which is provided with a weighing apparatus as set forth in any of claims 1-9.

11. Use of a weighing apparatus as set forth in any of claims 1-9 for weighing a load to be loaded on or unloaded from a vehicle.
